# EUROPÄISCHE PATENTSCHRIFT

(11) **EP 2 318 894 B1**
(45) Veröffentlichungstag und Bekanntmachung des Hinweises auf die Patenterteilung: **15.08.2012**
(21) Anmeldenummer: 09777550.6
(22) Anmeldetag: 30.07.2009
(51) Int. Cl.: G05D 7/06, G05D 16/20

(54) **VERFAHREN UND VORRICHTUNG ZUR STEUERUNG DES DRUCKS UND/ODER VOLUMENSTROMS EINES FLUIDS**
METHOD AND DEVICE FOR CONTROLLING THE PRESSURE AND / OR FLOW RATE OF FLUID
PROCÉDÉ ET DISPOSITIF DE RÉGULATION DE LA PRESSION ET/OU DU DÉBIT VOLUMIQUE D'UN FLUIDE

(30) Priorität: 02.08.2008 DE 102008036215
(43) Veröffentlichungstag der Anmeldung: 11.05.2011
(73) Patentinhaber: B/E Aerospace Systems GmbH, 23560 Lübeck (DE)
(72) Erfinder: CONRAD, Rüdiger, 23617 Stockelsdorf (DE); MARZ, Heiko, 23560 Lübeck (DE)
(74) Vertreter: Vollmann, Heiko
(86) Internationale Anmeldenummer: PCT/EP2009/005528
(87) Internationale Veröffentlichungsnummer: WO 2010/015360

(56) Entgegenhaltungen:
- EP-A1- 1 674 666
- WO-A1-2008/022766
- DE-A1- 19 728 319
- US-A- 5 251 815
- US-A1- 2002 014 239

## Beschreibung

Die Erfindung betrifft eine Vorrichtung zur Steuerung des Volumenstroms und/oder Drucks in einer Leitung.

Insbesondere in Luftfahrzeugen stellt sich regelmäßig die Aufgabe, den Volumenstrom und/oder den Druck eines Fluids zu steuern. Beispielsweise erfordern Systeme zur Notfallsauerstoffversorgung in Luftfahrzeugen Verfahren bzw. Vorrichtungen zur Dosierung von Sauerstoff.

Grundsätzlich gibt es eine Vielzahl von Möglichkeiten, den Volumenstrom und/oder den Druck eines Fluids zu steuern. Diese zerfallen im Wesentlichen in zwei Kategorien: Entweder wird die zur Steuerung erforderliche Energie elektrisch zugeführt, wie dies beispielsweise in einem elektrisch steuerbaren Proportionalventil geschieht. Alternativ arbeitet die Steuerung rein mechanisch, etwa pneumatisch oder hydraulisch, wie in einem Druckminderer.

Diese beiden Alternativen weisen dabei folgende Nachteile auf: So arbeiten mechanische Steuereinheiten bekanntermaßen wenig genau. Darüber hinaus sind sie nachteilig typischerweise recht schwer. Steuereinheiten mit elektrischen Komponenten hingegen arbeiten zwar wesentlich genauer, erfordern allerdings nachteilig stets eine Energieversorgung.

Aus DE 197 28 319 A1 ist ein Atemapparat bekannt, bei welchem die Atemgaszufuhr durch Abbremsen eines Pressluftmotors oder einer Turbine gesteuert wird. Der Pressluftmotor oder die Turbine treiben einen Generator an, der aus der Druckenergie des Atemgases elektrische Energie für die Regelung gewinnt.

Vor diesem Hintergrund ist es Aufgabe der Erfindung, eine Vorrichtung zu schaffen, mit der die Steuerung des Volumenstroms und/oder des Drucks eines Fluids gerätetechnisch in leichter Bauweise umgesetzt werden kann und vielseitig und einfach, sowie mit hoher Genauigkeit zu bewerkstelligen ist.

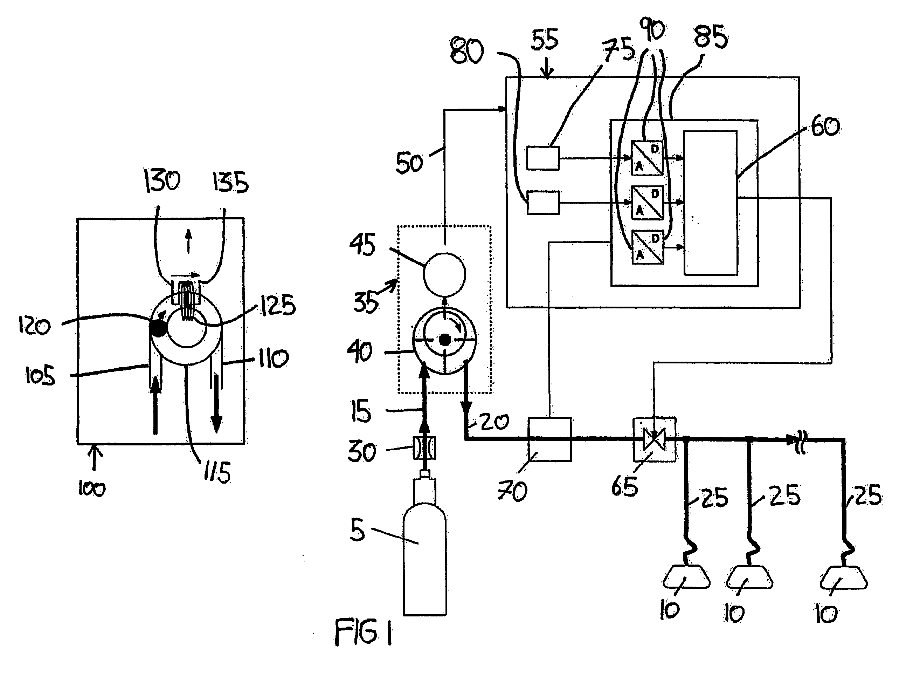

Diese Aufgabe wird erfindungsgemäß durch eine Vorrichtung mit den in Anspruch 1 angegebenen Merkmalen gelöst. Bevorzugte Ausführungsformen ergeben sich aus den Unteransprüchen, der nachfolgenden Beschreibung und der Zeichnung.

Es wird in einem Verfahren zur Steuerung des Drucks und/oder des Volumenstroms eines Fluids einem durch eine Leitung strömenden Fluid Strömungsenergie entzogen und diese zumindest teilweise in elektrische Energie umgewandelt. Zumindest ein Teil der aus der Strömungsenergie erhaltenen elektrischen Energie wird zur Steuerung des Volumenstroms und/oder Drucks des Fluids genutzt. Vorteilhaft kann so eine sehr genaue Steuerung erreicht werden, da zur Steuerung elektrische Energie genutzt wird. Ein weiterer Vorteil besteht in der Möglichkeit, das Verfahren gerätetechnisch kompakt und mit geringem Gewicht zu realisieren, da auf eine externe Energieversorgung verzichtet werden kann und keine rein mechanische Steuerung des Volumenstroms und/oder des Drucks erfolgen muss. Gleichzeitig wird ohne externe Energieversorgung eine hohe Ausfallsicherheit des Verfahrens erreicht, da es sich energetisch unabhängig von anderen Versorgungssystemen durchführen lässt.

Je nach Anforderung kann der Entzug von Strömungsenergie aus einem durch eine Leitung strömenden Fluid verschieden ausgestaltet werden: So kann der Strömungsenergieentzug beispielsweise an einer Fluidleitung, speziell derselben Fluidleitung, an welcher der Volumenstrom und/oder der Druck des Fluids gesteuert wird, erfolgen. Damit kann das Verfahren räumlich begrenzt an einer Stelle eines Leitungssystems ausgeführt werden. Es kann allerdings auch zweckmäßig sein, den Strömungsenergieentzug und die Steuerung an verschiedenen Leitungen eines oder mehrerer Fluidleitungssysteme vorzunehmen, beispielsweise um die Erzeugung elektrischer Energie für eine Vielzahl von Systemen zu zentralisieren.

Bevorzugt ist das Verfahren derart ausgestaltet, dass der Volumenstrom und/oder Druck geregelt wird und zu dieser Regelung mindestens ein Teil der aus der Strömungsenergie gewonnenen elektrischen Energie genutzt wird. In die Regelung können dazu Messsignale bezüglich des Fluids, dessen Volumenstrom und/oder Druck zu steuern ist, über eine Rückkopplung Eingang finden. Überdies lassen sich in eine solche Regelung aber auch extern erhaltene Messinformationen, d.h. Messinformationen, die außerhalb des Fluidleitungssystems gewonnen wurden, beispielsweise Temperatur- und Außendruckinformationen, einspeisen.

Bevorzugt bildet in dem Verfahren insbesondere gasförmiger Sauerstoff das Fluid. Dabei wird das Verfahren gemäß einer vorteilhaften Anwendung zur Notfallsauerstoffversorgung in bemannten Luftfahrzeugen eingesetzt. Da dieses Verfahren kostensparend, unaufwendig und gewichtssparend eingesetzt werden kann, ist es zum Einsatz in Luftfahrzeugen besonders geeignet. Zudem ist keine externe Energieversorgung erforderlich, weshalb das Verfahren als Notfallsystem autark und vielseitig Verwendung finden kann. Darüber hinaus kann die Steuerung des Volumenstroms und/oder des Drucks des Fluids wegen der hierzu in dem Verfahren unternommenen Umwandlung eines Teils der Strömungsenergie in elektrische Energie mit der erforderlichen Genauigkeit erfolgen. Zweckmäßigerweise ist das Verfahren dabei derart ausgestaltet, dass die Regelung etwa Messinformationen zur Passagierversorgung, insbesondere zum Bedarf an dem zu den Sauerstoffmasken zu leitenden Sauerstoff erhält und überdies Druck- und/oder Temperaturinformationen, beispielsweise zur Anpassung des Versorgungssystems an die jeweilige Flughöhe und Temperatur, verarbeitet.

Die erfindungsgemäße Vorrichtung zur Steuerung des Volumenstroms und/oder des Drucks eines Fluids in einer Leitung, welche insbesondere zur Ausführung des oben beschriebenen Verfahrens geeignet ist, weist mindestens einen elektrischen Generator auf, der zum Entzug von Strömungsenergie aus einem Fluidstrom und zu deren zumindest teilweisen Umwandlung in elektrische Energie ausgebildet ist. Der Generator weist eine torusförmige Sauerstoffführung auf, in welche ein Magnet eingebracht ist, der von dem durch die Sauerstoffführung strömenden Sauerstoff antreibbar und auf einer Kreisbahn innerhalb der torusförmigen Führung bewegbar ist. Der Generator weist eine Spule auf, welche um einen kreisförmigen Querschnitt der Sauerstoffführung gewickelt ist. Weiter weist die Vorrichtung ein Steuermittel zur Steuerung des Volumenstroms und/oder des Drucks des Fluids in der Leitung auf. Dabei ist das Steuermittel mit einem elektrischen, vom Generator gespeisten Antrieb ausgestattet. Durch die Verwendung eines elektrisch angetriebenen Steuermittels kann eine äußerst genaue Steuerung des Volumenstroms und/oder des Drucks erfolgen. Darüber hinaus muss in die Vorrichtung keine zusätzliche Energieversorgung integriert werden. Damit kann die Vorrichtung energetisch autark betrieben werden. Folglich ist eine hohe Ausfallsicherheit beim Betrieb der Vorrichtung gegeben. Darüber hinaus lässt sich die Vorrichtung gewichtssparend auslegen, da weder schwere mechanische Komponenten noch zusätzliche Energiequellen in die Vorrichtung integriert werden müssen. Insbesondere kann auf einen Druckminderer verzichtet werden. Der elektrische Generator kann dabei ein- oder mehrstufig aufgebaut sein. Die Vorrichtung ist für eine Sauerstoff führende Fluidleitung ausgebildet und Teil einer Notfallsauerstoffversorgung in bemannten Luftfahrzeugen.

Je nach Einsatzzweck kann die Vorrichtung unterschiedlich ausgestaltet sein, in einer bevorzugten Ausführungsform sind in der Vorrichtung der zumindest eine Generator und das zumindest eine Steuermittel seriell an derselben Leitung angeordnet. Eine solche Vorrichtung lässt sich zweckmäßigerweise so ausbilden, dass sie einteilig an einer Stelle der Leitung anbringbar ist. In einer anderen bevorzugten Ausführungsform sind der zumindest eine Generator und das zumindest eine Steuermittel an verschiedenen Leitungen, vorzugsweise an parallelen Zweigen eines Leitungssystems angeordnet. Über eine solche Vorrichtung kann entsprechend die zur Steuerung erforderliche elektrische Energie an dazu geeigneten Stellen des Leitungssystems gewonnen und der Steuerung zugeführt werden. Ferner ist es möglich, einen zentralen Generator für eine Mehrzahl von Steuermitteln in mehreren, auch unterschiedlichen Fluidleitungssystemen vorzusehen.

Weiter bevorzugt weist die erfindungsgemäße Vorrichtung eine manuelle Auslösesteuerung zur Fluidbeströmung derjenigen Leitung, welche zum Entzug von Strömungsenergie durch den Generator vorgesehen ist, auf. Auf diese Weise kann eine erfindungsgemäße Vorrichtung manuell gestartet werden, so dass jene Leitung, an welcher der Generator zum Entzug von Strömungsenergie vorgesehen ist, fluidbeströmt wird. Damit ist das Steuermittel zum Betriebsstart nach einer manuellen Betätigung der Auslösesteuerung mit Energie versorgt, so dass der weitere Betrieb der Steuerung automatisch erfolgt. Zusätzlich oder alternativ ist in einer vorteilhaften erfindungsgemäßen Vorrichtung ein manuell betätigbares Absperrventil in den Leitungen vorgesehen. Zugleich ist das zumindest eine Steuermittel, vorzugsweise ein in Ruhestellung geöffnetes Ventil, derart ausgebildet, dass es bei Beginn einer Fluiddurchströmung in den Leitungen einen mindestens so hohen Volumenstrom des Fluids durch die Leitungen strömen lässt, dass der Generator eine zum Betrieb des Steuermittels hinreichend hohe elektrische Leistung bereitstellt. Auch auf diese Weise wird durch eine anfängliche manuelle Betätigung eine genügend hohe Fluidbeströmung ermöglicht, so dass der Generator das Steuermittel automatisch antreiben kann.

Bevorzugt ist die Vorrichtung mit einer Regelung ausgestattet, welche von zumindest einem Teil der elektrischen Energie des Generators versorgt wird. Somit kann die Steuerung des Volumenstroms und/oder des Drucks eines Fluids mit einer Rückkopplung versehen werden und/oder mit weiteren externen Messsignalen abgeglichen werden, d.h. mit Umgebungsinformationen außerhalb des Fluidleitungssystems, wie etwa der Temperatur oder dem Luftdruck. In einer bevorzugten Ausgestaltung einer solchen Regelung geschieht die Rückkopplung über einen Sensor, der zur Messung von Volumenstrom und/oder Druck eines Fluids ausgebildet ist, dessen Ausgangssignal der Regelung zugeführt ist. Auf diese Weise regelt die Regelung die Ansteuerung des Steuermittels mit den erhaltenen Messsignalen des Sensors.

Weiter bevorzugt stellt ein elektrisch gesteuertes Stellventil das zumindest einem Steuermittel dar. Besonders bevorzugt ist die Vorrichtung für eine gasförmigen Sauerstoff führende Fluidleitung ausgebildet und Teil einer Notfallsauerstoffversorgung in bemannten Luftfahrzeugen. Gerade für diesen Einsatz der erfindungsgemäßen Vorrichtung erweist sich die Möglichkeit des gewichtssparenden Aufbaus, einer genauen Steuerung des Volumenstroms bzw. des Drucks eines Fluids und die energieautarke Umsetzung als besonders vorteilhaft.

Nachfolgend wird die Erfindung beispielhaft anhand eines Schaubildes beschrieben. Das beigefügte Blockschaltbild zeigt die Struktur einer erfindungsgemäßen Vorrichtung zur Steuerung des Volumenstroms eines Fluids in einer Leitung. Die gezeigte Vorrichtung zur Steuerung des Volumenstroms und/oder Drucks eines Fluids in einer Leitung dient zur Ausführung des Verfahrens zur Steuerung des Volumenstroms und/oder des Drucks eines Fluids. In diesem Ausführungsbeispiel bildet gasförmiger Sauerstoff das Fluid und die Vorrichtung ist zum Betrieb einer Notfallsauerstoffversorgung in bemannten Luftfahrzeugen ausgebildet.

An Bord eines bemannten Luftfahrzeuges wird gasförmiger Sauerstoff in einer Druckgasflasche 5 mitgeführt und Passagieren im Notfall über Sauerstoffmasken 10 zur Verfügung gestellt. Der Sauerstoff gelangt dazu über als Sauerstoffleitungen ausgebildete Fluidleitungen 15, 20 und als Versorgungsschläuche ausgebildete Leitungen 25 zu den Sauerstoffmasken 10. Da der Druck in der Druckgasflasche 5 bis zu einigen 100 Bar betragen kann, wird der Sauerstoffdruck vor der Einspeisung des Sauerstoffs in die Leitung 15 mit einem Reduzierventil 30 gemindert. Die Strömungsenergie des durch die Leitung 15 strömenden Sauerstoffs wird diesem durch einen elektrischen Generator 35 teilweise entzogen. Der elektrische Generator 35 besteht dazu aus einem Flügelzellenmotor 40, der die Strömungsenergie in die Rotationsenergie einer Welle umsetzt. Die rotierende Welle treibt nachfolgend einen Stromgenerator 45 an, welcher die elektrische Energie in eine elektrische Versorgungsleitung 50 einspeist. Die elektrische Versorgungsleitung 50 speist eine elektronische Regelung 55. Die elektronische Regelung 55 versorgt mit der erhaltenen elektrischen Energie eine Ansteuerungseinheit 60, die einen Teil der elektrischen Energie an das als elektrisch steuerbares Ventil ausgestaltete Steuermittel 65 weitergibt. Das Ventil 65 steuert dabei den Volumenstrom in der Sauerstoffleitung 20, nachdem der durch die Leitungen 15 und 20 strömende Sauerstoff den elektrischen Generator 35 passiert hat. Über das Ventil 65 kann damit der Volumenstrom des durch die Versorgungsschläuche 25 in die Sauerstoffmasken 10 gelangenden Sauerstoffs gesteuert werden.

Um den Volumenstrom in der Leitung 20 zu regeln, wird dieser über einen Durchflusssensor 70 gemessen. Die Messsignale des Durchflusssensors 70 werden zur Rückkopplung an die Regelung 55 übermittelt. Die Regelung 55 enthält darüber hinaus externe Messsensoren, d. h. Sensoren, die Messungen außerhalb des Fluidleitungssystems vornehmen. So enthält die Regelung einen Temperatursensor 75 und einen Höhenmesser 80, so dass der zur Notfallversorgung der Passagiere mit Sauerstoff erforderliche Durchflussstrom durch die Sauerstoffleitungen 15, 20 und 25 ermittelt werden kann. Zu dieser Ermittlung der relevanten Steuergrößen ist die Ansteuerungseinheit 60 in eine Kontrolleinheit 85 eingegliedert, die Eingänge für die Signalleitungen der Sensoren 70, 75 und 80 aufweist. Die Messsignale werden in der Kontrolleinheit 85 mittels Analog-Digital-Wandler 90 in digitale Signale umgewandelt, die die Ansteuerungseinheit 60 zur Ansteuerung des Ventils 65 weiter verarbeiten kann.

Der Generator 35, der in dem oben beschriebenen Ausführungsbeispiel zweiteilig aus einem Flügelzellenmotor 40 und einem Stromgenerator 45 aufgebaut ist, lässt sich erfindungsgemäß durch einen einteilig aufgebauten, einfachen und robusten elektrischen Generator 100 ersetzen. Dabei münden eine Sauerstoffzuleitung 105 und eine Sauerstoffableitung 110 in eine torusförmige Sauerstoffführung 115. In dieser Sauerstoffführung 115 ist ein Magnet 120 eingebracht, der von dem durch die Sauerstoffführung strömenden Sauerstoff angetrieben wird und sich fortwährend auf einer Kreisbahn entlang innerhalb der torusförmigen Führung bewegt. Umfänglich um einen kreisförmigen Querschnitt der torusförmigen Sauerstoffführung 115 ist eine Spule 125 gewickelt, die der Magnet 120 auf seinem Umlauf mit hoher Frequenz passiert. Durch diese Bewegung des Magneten durch die Spule kann an Klemmen 130 und 135 der Spule 125 eine Induktionsspannung abgegriffen werden. Diese lässt sich wie oben beschrieben zur Versorgung der Regelung 55 über die elektrische Leitung 50 nutzen.

In der Figur nicht dargestellt ist ein manuelles Absperrventil, welches den Sauerstofffluss von der Druckgasflasche 5 durch die Leitungen 15, 20 und 25 in die Sauerstoffmasken 10 im Bedarfsfall in Gang setzt. Dieses ist durch einen als Absperrventil arbeitenden Originalitätsverschluss realisiert, der an der Druckgasflasche 5 angebracht ist und im Notfall zur Sauerstoffversorgung öffnend gestellt wird. Dieser Originalitätsverschluss wird zentral betätigt und bedarf keiner Energieversorgung durch den Generator, der erst zu Beginn der Sauerstoffströmung durch die Leitungen 15, 20 und 25 mit der Energiebereitstellung startet.

### Bezugszeichenliste

- 5: Druckgasflasche als Sauerstoffquelle
- 10: Sauerstoffmasken
- 15: Sauerstoffleitung
- 20: Sauerstoffleitung
- 25: Versorgungsschläuche
- 30: Reduzierventil
- 35: Elektrischer Generator
- 40: Flügelzellenmotor
- 45: Stromgenerator
- 50: Elektrische Leitung
- 55: Elektronische Regelung
- 60: Ansteuerungseinheit
- 65: Ventil
- 70: Durchflusssensor
- 75: Temperatursensor
- 80: Höhenmesser
- 85: Kontrolleinheit
- 90: Analogdigitalwandler
- 100: Elektrischer Generator
- 105: Sauerstoffzuleitung
- 110: Sauerstoffableitung
- 115: Torusförmige Sauerstoffführung
- 120: Magnet
- 125: Spule
- 130: Spulenklemme
- 135: Spulenklemme

## Patentansprüche

1. Vorrichtung zur Steuerung des Volumenstroms und/oder Drucks eines Fluids in einer Leitung (20), welche mindestens einen elektrischen Generator (35) aufweist, der zum Entzug von Strömungsenergie aus einem Fluidstrom und zu deren zumindest teilweisen Umwandlung in elektrische Energie ausgebildet ist, **dadurch gekennzeichnet, dass** der Generator eine torusförmige Sauerstoffführung (115) aufweist, in welche ein Magnet (120) eingebracht ist, der von dem durch die Sauerstoffführung strömenden Sauerstoff antreibbar und auf einer Kreisbahn innerhalb der torusförmigen Führung bewegbar ist, und wobei der Generator eine Spule aufweist, welche um einen kreisförmigen Querschnitt der Sauerstoffführung gewickelt ist, mit mindestens einem Steuermittel (65) zur Steuerung des Volumenstroms und/oder Drucks eines Fluids in einer Leitung (20), wobei das Steuermittel (65) einen elektrischen, vom Generator (35) gespeisten Antrieb aufweist und wobei die Vorrichtung für eine Sauerstoff führende Fluidleitung ausgebildet und Teil einer Notfallsauerstoffversorgung in bemannten Luftfahrzeugen ist.

2. Vorrichtung nach Anspruch 1, **dadurch gekennzeichnet, dass** der zumindest eine Generator (35) und das zumindest eine Steuermittel (65) seriell an derselben Leitung (20) angeordnet sind.

3. Vorrichtung nach Anspruch 1, **dadurch gekennzeichnet, dass** der zumindest eine Generator (35) und das zumindest eine Steuermittel (65) an verschiedenen Leitungen, vorzugsweise an parallelen Zweigen eines Leitungssystems, angeordnet sind.

4. Vorrichtung nach einem der vorangehenden Ansprüche, **dadurch gekennzeichnet, dass** sie eine manuelle Auslösesteuerung zur Fluidbeströmung der Leitung (15), welche zum Entzug von Strömungsenergie durch den Generator (35) vorgesehen ist, aufweist.

5. Vorrichtung nach einem der vorangehenden Ansprüche, **dadurch gekennzeichnet, dass** mindestens ein manuell betätigbares Absperrventil in den Leitungen vorgesehen ist und das zumindest eine Steuermittel (65) derart ausgebildet ist, dass es bei Beginn einer Fluiddurchströmung in den Leitungen (15) einen mindestens so hohen Volumenstrom des Fluids durch die Leitungen (15) strömen lässt, dass der Generator (35) eine zum Betrieb des Steuermittels (65) hinreichend hohe elektrische Leistung bereitstellt.

6. Vorrichtung nach einem der vorangehenden Ansprüche, **gekennzeichnet durch** eine Regelung (55) für das zumindest eine Steuermittel (65), welche zur Versorgung mit zumindest einem Teil der elektrischen Energie des Generators (35) ausgebildet ist.

7. Vorrichtung nach einem der vorangehenden Ansprüche, **dadurch gekennzeichnet, dass** sie mindestens einen Sensor (70) zur Messung von Volumenstrom und/oder Druck eines Fluids aufweist, dessen Ausgangssignal der Regelung (55) zugeführt ist.

8. Vorrichtung nach einem der vorangehenden Ansprüche, **dadurch gekennzeichnet, dass** das zumindest eine Steuermittel (65) durch ein elektrisch gesteuertes Stellventil gebildet wird.

## Claims

1. A device for the control of the flow rate and/or of the pressure of a fluid in a conduit (20), which at least comprises one electrical generator (35) which is designed for the removal of flow energy from a fluid flow and for its at least partial conversion into electric energy, **characterised in that** the generator comprises a torus-shaped oxygen guide (115) in which a magnet (120) is incorporated which is drivable by the oxygen flowing through the oxygen guide and which is moveable onto a circular path within the torus-shaped guide and wherein the generator comprises a coil which is wound about a circular cross section of the oxygen guide with at least one control means (65) for the control of the flow rate and/or pressure of a fluid in a conduit (20), wherein the control means (65) comprises an electrical drive which is fed by the generator (35) and wherein the device is designed for a fluid conduit leading oxygen and the device is part of an emergency oxygen supply in manned aircraft.

2. A device according to claim 1, **characterised in that** the at least one generator (35) and the at least one control means (65) are arranged serially at the same conduit (20).

3. A device according to claims 1, **characterised in that** the at least one generator (35) and the at least one control means (65) are arranged at different conduits, preferably at parallel branches of a conduit system.

4. A device according to one of the preceding claims **characterised in that** the device comprises a manual initiation control for the fluid flow of the conduit (15) which is provided for the removal of the flow energy by the generator (35).

5. A device according to one of the preceding claims, **characterised in that** at least one manually actuatable shut-off valve is provided in the conduits and that at least one control means (65) is designated in a manner such that at the beginning of a fluid throughflow in the conduits (15), it lets at least such a high flow rate of the fluid through the conduits (15), that the generator (35) provides an adequately high electrical power for the operation of the control means (65).

6. A device according to one of the preceding claims, characterised with a closed-loop control (55) for the at least one control means (65) which is designated for the supply with at least a part of the electrical energy of the generator (35).

7. A device according to one of the preceding claims, **characterised in that** the device comprises at least one sensor (70) for the measurement of the flow rate and/or of the pressure of a fluid, whose output signal is led to the closed-loop control (55).

8. A device according to one of the preceding claims, **characterised in that** the at least one control means (65) is formed by an electrically controlled control valve.

## Revendications

1. Dispositif de commande du débit volumique et/ou de la pression d'un fluide dans un conduit (20), comprenant au moins un générateur électrique (35) qui est conçu pour extraire de l'énergie d'écoulement d'un flux de fluide et la transformer au moins partiellement en énergie électrique, **caractérisé en ce que** le générateur présente un guide d'oxygène toroïdal (115) dans lequel est inséré un aimant (120) pouvant être entraîné par l'oxygène s'écoulant à travers le guide d'oxygène et pouvant être déplacé sur une trajectoire circulaire à l'intérieur du guide toroïdal, et dans lequel le générateur présente une bobine enroulée autour d'une section circulaire du guide d'oxygène, dispositif comprenant au moins un moyen de commande (65) pour commander le débit volumique et/ou la pression d'un fluide dans un conduit (20), le moyen de commande (65) présentant un entraînement électrique alimenté par le générateur (35) et le dispositif étant conçu pour un conduit de fluide conduisant de l'oxygène et faisant partie d'une alimentation en oxygène de secours dans des aéronefs avec occupants.

2. Dispositif selon la revendication 1, **caractérisé en ce que** le générateur (35), au moins au nombre de un, et le moyen de commande (65), au moins au nombre de un, sont disposés en série sur le même conduit (20).

3. Dispositif selon la revendication 1, **caractérisé en ce que** le générateur (35), au moins au nombre de un, et le moyen de commande (65), au moins au nombre de un, sont disposés sur différents conduits, de préférence sur des embranchements parallèles d'un système de conduits.

4. Dispositif selon l'une des revendications précédentes, **caractérisé en ce qu'**il présente une commande de déclenchement manuelle pour l'écoulement de fluide dans le conduit (15), qui est prévue pour l'extraction d'énergie d'écoulement par le générateur (35).

5. Dispositif selon l'une des revendications précédentes, **caractérisé en ce qu'**au moins une soupape d'arrêt à actionnement manuel est prévue dans les conduits et **en ce que** le moyen de commande (65), au moins au nombre de un, est conçu de façon à faire circuler, au début d'un écoulement de fluide dans les conduits (15), un débit volumique du fluide à travers les conduits (15) au moins suffisant pour que le générateur (35) fournisse une puissance électrique suffisamment élevée pour le fonctionnement du moyen de commande (65).

6. Dispositif selon l'une des revendications précédentes, **caractérisé par** une régulation (55) pour le moyen de commande (65), au moins au nombre de un, laquelle est conçue pour être alimentée par au moins une partie de l'énergie électrique du générateur (35).

7. Dispositif selon l'une des revendications précédentes, **caractérisé en ce qu'**il présente au moins un capteur (70) de mesure du débit volumique et/ou de la pression d'un fluide, dont le signal de sortie est acheminé à la régulation (55).

8. Dispositif selon l'une des revendications précédentes, **caractérisé en ce que** le moyen de commande (65), au moins au nombre de un, est constitué d'une soupape de réglage à commande électrique.
